(19) Europäisches Patentamt
European Patent Office
Office européen des brevets

(11) **EP 4 109 350 B1**

(12) **EUROPEAN PATENT SPECIFICATION**

(45) Date of publication and mention
of the grant of the patent:
**26.11.2025 Bulletin 2025/48**

(21) Application number: **21757539.8**

(22) Date of filing: **19.02.2021**

(51) International Patent Classification (IPC):
*G06N 3/08* (2023.01)     *G06N 3/04* (2023.01)
*G06N 3/0495* (2023.01)     *G06N 3/082* (2023.01)
*G06N 3/0464* (2023.01)     *G06F 17/14* (2006.01)

(52) Cooperative Patent Classification (CPC):
**G06N 3/082; G06N 3/0464; G06N 3/0495;**
G06F 17/147

(86) International application number:
**PCT/CN2021/076878**

(87) International publication number:
**WO 2021/164737 (26.08.2021 Gazette 2021/34)**

(54) **NEURAL NETWORK COMPRESSION METHOD, DATA PROCESSING METHOD, AND RELATED APPARATUSES**

VERFAHREN ZUR KOMPRIMIERUNG EINES NEURONALEN NETZWERKS, DATENVERARBEITUNGSVERFAHREN UND ZUGEHÖRIGE VORRICHTUNGEN

PROCÉDÉ DE COMPRESSION DE RÉSEAU NEURONAL, PROCÉDÉ DE TRAITEMENT DE DONNÉES, ET APPAREILS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.02.2020 CN 202010105175**

(43) Date of publication of application:
**28.12.2022 Bulletin 2022/52**

(73) Proprietor: **Huawei Technologies Co., Ltd.**
**Longgang**
**Shenzhen, Guangdong 518129 (CN)**

(72) Inventors:
• **SHU, Han**
**Shenzhen, Guangdong 518129 (CN)**
• **CHEN, Hanting**
**Shenzhen, Guangdong 518129 (CN)**
• **WANG, Yunhe**
**Shenzhen, Guangdong 518129 (CN)**
• **XU, Chunjing**
**Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
CN-A- 108 229 679     CN-A- 109 523 017
CN-A- 110 033 083     CN-A- 110 288 002
CN-A- 111 382 867     US-A1- 2019 244 080

• WANG ZHENZHEN ET AL: "Pruning 3D Filters For Accelerating 3D ConvNets", IEEE TRANSACTIONS ON MULTIMEDIA, IEEE, USA, vol. 22, no. 8, 30 October 2019 (2019-10-30), pages 2126 - 2137, XP011800677, ISSN: 1520-9210, [retrieved on 20200723], DOI: 10.1109/ TMM.2019.2950523
• CHENG YU ET AL: "A Survey of Model Compression and Acceleration for Deep Neural Networks", ARXIV.ORG, 8 September 2019 (2019-09-08), pages 1 - 10, XP093064904, Retrieved from the Internet <URL:https://arxiv. org/pdf/1710.09282v8.pdf> [retrieved on 20230718]

**Description**

**TECHNICAL FIELD**

This application relates to the field of artificial intelligence technologies, and in particular, to a neural network compression method, a data processing method, and a related apparatus.

**BACKGROUND**

An input of a three-dimensional convolutional neural network (convolutional neural networks, CNN) is video (or a plurality of frames of images). Therefore, three-dimensional convolution (3 dimension convolution, 3D CONV) further slides in a time dimension (or referred to as a depth dimension) in addition to sliding in height and width space. Because mutual information between time dimensions of video or a plurality of frames of images is considered for the three-dimensional convolution, the three-dimensional convolution is suitable for related processing in the field of video and the field of three-dimensional images.

Compression for a convolutional neural network model is proposed in the industry, to reduce a parameter quantity and a calculation amount of a convolutional neural network. In a current technology, compression for a three-dimensional convolutional neural network model is implemented by migrating a two-dimensional convolutional neural network model compression method. However, a calculation amount of a three-dimensional convolutional neural network cannot be effectively reduced.

How to further reduce the calculation amount of the three-dimensional convolutional neural network is a technical problem that urgently needs to be resolved.

Wang Zhenzhen et al: "Pruning 3D Filters For Accelerating 3D ConvNets", IEEE Transactions On Multimedia, IEEE, USA, vol. 22, no. 8, 30 October 2019 (2019-10-30), pages 2126-2137, ISSN: 1520-9210, DOI: 10.1109/TMM.2019.2950523 discloses a method for pruning 3D convolutional neural networks by selecting and removing redundant filters using determinantal point processes (DPPs) to ensure that the remaining filters are both informative and diverse, thereby accelerating inference and reducing model size while maintaining performance on spatiotemporal tasks.

**SUMMARY**

The invention is defined by the appended claims.

**BRIEF DESCRIPTION OF DRAWINGS**

FIG. 1 is a schematic diagram of a three-dimensional convolutional neural network;

FIG. 2 is a schematic diagram of a three-dimensional convolution operation;

FIG. 3 is a schematic flowchart of a neural network compression method according to an embodiment of this invention;

FIG. 4, FIG. 5, and FIG. 6 are schematic diagrams of pruning a time dimension of an orthogonally transformed three-dimensional convolution kernel according to an embodiment of this invention;

FIG. 7 is a schematic flowchart of a data processing method according to an embodiment of this application;

FIG. 8 is a schematic flowchart of a data processing method according to another embodiment of this invention;

FIG. 9 is a schematic block diagram of a neural network compression apparatus according to an embodiment of this invention;

FIG. 10 is another schematic block diagram of a data processing apparatus according to an embodiment of this invention; and

FIG. 11 is still another schematic block diagram of a data processing apparatus according to an embodiment of this invention;

## DESCRIPTION OF EMBODIMENTS

The following describes technical solutions of this invention with reference to accompanying drawings.

Three-dimensional image processing is an important basic task in the field of computer vision. For example, the three-dimensional image processing is widely used in aspects such as terminal vision and medical images. A three-dimensional convolutional neural network (convolutional neural networks, CNN) is proposed to deal with problems related to the field of video and the field of three-dimensional images.

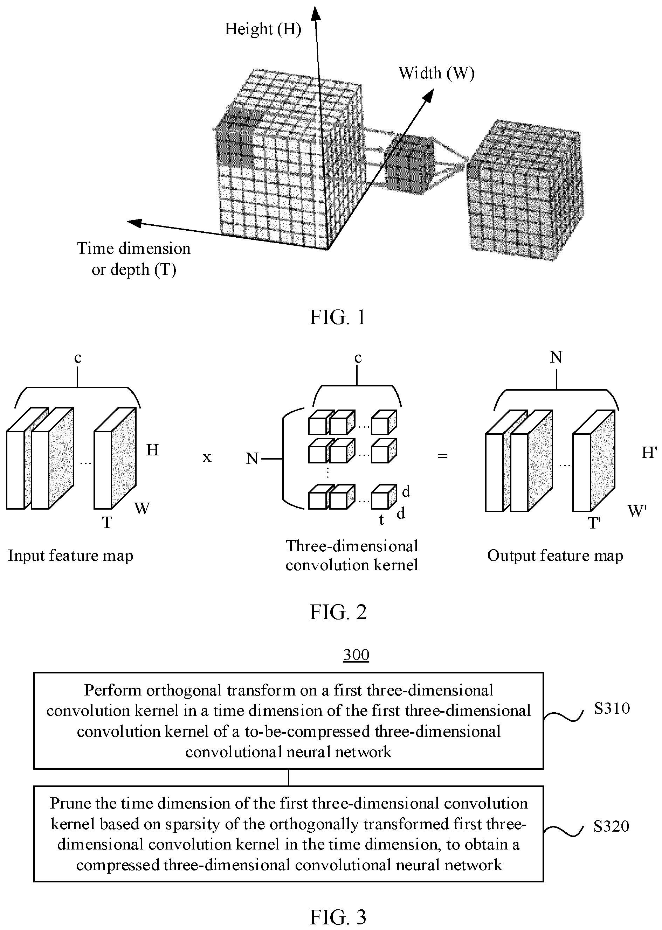

An input of the three-dimensional convolutional neural network is video (or a plurality of frames of images). Therefore, as shown in FIG. 1, three-dimensional convolution (3 dimension convolution, 3D CONV) further slides in a time dimension (or referred to as a depth dimension) in addition to sliding in height and width space.

For example, FIG. 2 is a schematic diagram of a three-dimensional convolution operation. An input feature map is three-dimensional. H indicates a height of the input feature map, W indicates a width of the input feature map, and T indicates a depth (corresponding to a time dimension) of the input feature map. A convolution kernel is three-dimensional. d represents a width and a height of the convolution kernel, and t represents a depth (corresponding to a time dimension) of the convolution kernel. C represents an input channel of the three-dimensional convolution kernel, and N represents an output channel of the three-dimensional convolution kernel. The input channel c is consistent with a channel c of the input feature map, and the output channel N is consistent with a channel N of an output feature map. As shown in FIG. 2, convolution operation is performed on the input feature map whose channel c has a size of WxHxT and the three-dimensional convolution kernel, to obtain the output feature map whose channel N has a size of W'xH'xT'.

Because mutual information between time dimensions of video or a plurality of frames of images is considered for the three-dimensional convolution, the three-dimensional convolution is suitable for related processing in the field of video and the field of three-dimensional images. The three-dimensional convolution is usually used for tasks such as video categorization or three-dimensional image segmentation.

A parameter quantity and a calculation amount of the three-dimensional convolutional neural network are huge (refer to FIG. 1 and FIG. 2). It should be understood that two-dimensional convolution slides on a two-dimensional input image, and the input of the three-dimensional convolution is the video (or the plurality of frames of images). Therefore, the three-dimensional convolution further slides in the time dimension in addition to sliding in length and width space. Therefore, compared with a parameter quantity and a calculation amount of a two-dimensional convolutional neural network, the parameter quantity and the calculation amount of the three-dimensional convolutional neural network increase at a multiplication level. For example, for a three-dimensional convolution kernel including hundreds of thousands of parameters, a quantity of floating point operations per second (floating point operations per second, FLOPs) (which may also be referred to as floating-point operands) of a convolution operation may reach tens of millions. For the three-dimensional convolution operation, it is difficult to meet a requirement for fast data processing even on an existing graphical processing unit (graph processing unit, GPU) with high computing power. For another example, in the three-dimensional convolutional neural network, a parameter quantity of each convolutional layer usually can reach tens of thousands or hundreds of thousands, and a sum of parameters at all layers in the entire network can reach tens of millions. If a 32-bit floating point number is used for representation, a memory or a cache of hundreds of megabytes is required. It is difficult for an existing computing device to meet a requirement, of a complex three-dimensional convolutional neural network, for fast and efficient storage and transmission of parameters. Because the parameter quantity and the calculation amount of the three-dimensional convolutional neural network are huge, it is also difficult to use the three-dimensional convolutional neural network on an edge device (for example, a terminal device).

Compression for a convolutional neural network model is proposed in the industry, to reduce a parameter quantity and a calculation amount of a convolutional neural network. Usually, a pruning method is used to compress the convolutional neural network model. Currently, most pruning methods are designed for a common two-dimensional convolutional neural network, and some three-dimensional convolutional neural network compression methods are only migrating a two-dimensional convolutional neural network compression method to the three-dimensional convolutional neural network.

The applicant finds that the parameter quantity and the calculation amount of the three-dimensional convolutional neural network cannot be effectively reduced by compressing a three-dimensional convolutional neural network model by migrating a two-dimensional convolutional neural network model compression method.

This application provides a three-dimensional convolutional neural network compression solution to further reduce the parameter quantity and the calculation amount of the three-dimensional convolutional neural network.

In this invention, orthogonal transform is performed on a three-dimensional convolution kernel in a time dimension of the three-dimensional convolution kernel of a to-be-compressed three-dimensional convolutional neural network, and the time dimension of the orthogonally transformed three-dimensional convolution kernel is pruned. Compared with the conventional technology, a parameter quantity of the three-dimensional convolutional neural network can be further reduced, and therefore a calculation amount of the three-dimensional convolutional neural network can be effectively reduced.

This invention may be applied to a scenario related to video processing and multi-frame image processing, and includes but is not limited to examples listed below.

For example, the scenario related to the video processing is video action recognition. The video action recognition is a basic task of video content understanding and analysis, and is widely used. The video action recognition is video categorization. For example, input video is processed by using the three-dimensional convolutional neural network provided in this application, to obtain a recognized video category. The video category is, for example, running, ball games, or makeup. In this scenario, the three-dimensional convolutional neural network provided in this application may be referred to as a video action recognition categorization model.

For example, the scenario related to the multi-frame image processing is three-dimensional medical image segmentation. The three-dimensional medical image segmentation is widely used in the field of medical image processing. The three-dimensional medical image segmentation is semantic segmentation. For example, a target area is segmented from a plurality of consecutive frames of two-dimensional images, and the target area is usually a specific organ or a lesion area. For example, the plurality of frames of images are processed by using the three-dimensional convolutional neural network provided in this application, to obtain a target segmentation module in the plurality of frames of images. In this scenario, the three-dimensional convolutional neural network provided in this application may be referred to as a three-dimensional image segmentation model.

The following describes the three-dimensional convolutional neural network compression solution.

The three-dimensional convolutional neural network may include a plurality of three-dimensional convolution kernels. A neural network compression method provided in this application may be applicable to each three-dimensional convolution kernel, and the method applied to each three-dimensional convolution kernel is similar. For ease of understanding and brevity of description, one three-dimensional convolution kernel (denoted as a first three-dimensional convolution kernel) is used as an example for description in this embodiment of this application.

FIG. 3 is a schematic flowchart of a neural network compression method 300 according to an embodiment of this invention. The method 300 may be performed, for example, by a data processing apparatus, and the apparatus may be a terminal device or a chip. The method 300 includes the following steps S310 and S320.

S310: Perform orthogonal transform on a first three-dimensional convolution kernel in a time dimension of the first three-dimensional convolution kernel included in a to-be-compressed three-dimensional convolutional neural network. The first three-dimensional convolution kernel represents any one of a plurality of three-dimensional convolution kernels included in the three-dimensional convolutional neural network.

In the example in FIG. 2, the time dimension of the first three-dimensional convolution kernel is the dimension represented by t.

The performing orthogonal transform on a first three-dimensional convolution kernel in a time dimension of the first three-dimensional convolution kernel indicates that orthogonal transform is performed on a two-dimensional convolution kernel at each time point of the first three-dimensional convolution kernel.

S320: Prune the time dimension of the first three-dimensional convolution kernel based on sparsity of the orthogonally transformed first three-dimensional convolution kernel in the time dimension, to obtain a compressed three-dimensional convolutional neural network.

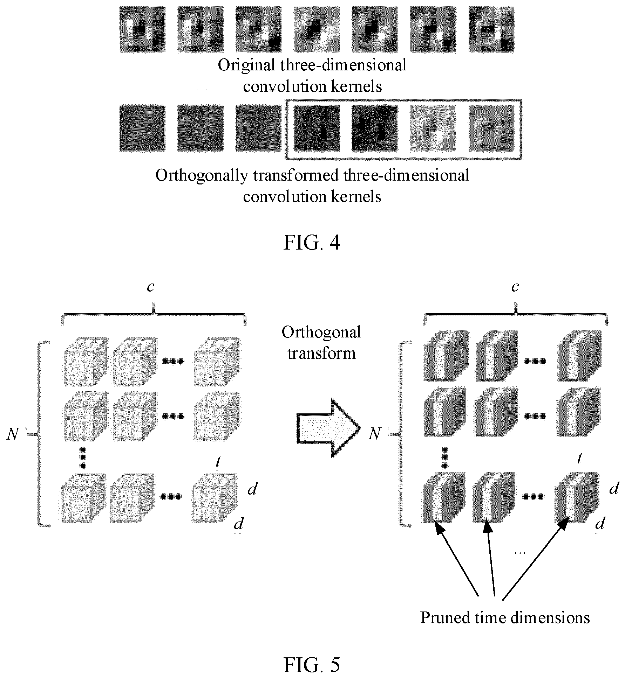

In the three-dimensional convolution kernel, as shown in FIG. 4, two-dimensional convolution kernels in the time dimension (which are two-dimensional convolution kernels at time points of the three-dimensional convolution kernel) have a similarity. In FIG. 4, a size of the three-dimensional convolution kernel is 7x7x7. As shown in schematic diagrams of seven two-dimensional convolution kernels in the time dimension of an original three-dimensional convolution kernel in the upper part of FIG. 4, it can be learned that some adjacent two-dimensional convolution kernels have a similarity (for example, first three two-dimensional convolution kernels). Orthogonal transform is performed on the three-dimensional convolution kernel in the time dimension of the three-dimensional convolution kernel, so that two-dimensional convolution kernels with a large similarity can present sparsity. As shown in schematic diagrams of seven two-dimensional convolution kernels in the time dimension of the orthogonally transformed three-dimensional convolution kernel in the lower part of FIG. 4, it can be learned that first three two-dimensional convolution kernels present large sparsity.

In step S320, a sparse two-dimensional convolution kernel in the time dimension of the first three-dimensional convolution kernel may be deleted, to prune the time dimension of the first three-dimensional convolution kernel. For example, in FIG. 4, first three sparse two-dimensional convolution kernels are removed, and only four two-dimensional convolution kernels in a block area are retained, to prune the time dimension of the three-dimensional convolution kernel.

It should be noted that the pruning the time dimension of the three-dimensional convolution kernel mentioned in this specification means pruning the two-dimensional convolution kernel in the time dimension of the three-dimensional convolution kernel. For brevity of description, description of "pruning the time dimension of the three-dimensional convolution kernel" is used below.

In step S320, the sparsity of the orthogonally transformed first three-dimensional convolution kernel in the time dimension is obtained; and the time dimension of the first three-dimensional convolution kernel is pruned based on the sparsity.

The sparsity of the orthogonally transformed three-dimensional convolution kernel in the time dimension may be obtained in a plurality of manners.

Optionally, in an implementation, the sparsity of the orthogonally transformed three-dimensional convolution kernel in the time dimension may be obtained based on an L21 norm of the orthogonally transformed three-dimensional convolution kernel.

It should be understood that the L21 norm represents a sum of Euclidean norms of columns in a matrix.

Optionally, the sparsity of the orthogonally transformed three-dimensional convolution kernel in the time dimension may be obtained in another feasible manner. For example, statistics are collected on parameter distribution of the orthogonally transformed three-dimensional convolution kernel. (1) The sparsity of the orthogonally transformed three-dimensional convolution kernel in the time dimension is obtained by setting a threshold and calculating a proportion of the parameter distribution that is less than the threshold. (2) The sparsity of the orthogonally transformed three-dimensional convolution kernel in the time dimension is obtained in manners such as calculating an average value of the parameter distribution.

In step S320, the time dimension of the first three-dimensional convolution kernel is pruned based on the sparsity of the orthogonally transformed first three-dimensional convolution kernel in the time dimension. In other words, a sparse time dimension in time dimensions of the orthogonally transformed first three-dimensional convolution kernel is pruned. A time dimension, with a specific sparsity degree, that needs to be pruned may be flexibly defined based on an actual situation. This is not limited in this application.

In an example, a range of sparsity degrees of all time dimensions of the three-dimensional convolution kernel is defined as 1 to 10, a threshold G ($1 < G \leq 10$) is set, and in step S320, a time dimension whose sparsity degree exceeds the threshold G is pruned. A value of the threshold G may be flexibly determined based on an actual requirement.

By way of example, and not limitation, FIG. 5 is a schematic diagram of pruning a sparse time dimension in time dimensions of an orthogonally transformed three-dimensional convolution kernel. The left part of FIG. 5 represents the three-dimensional convolution kernel for which the time dimension is not pruned, and the right part of FIG. 5 represents the orthogonally transformed three-dimensional convolution kernel for which the time dimension is pruned. The pruned time dimension is indicated in FIG. 5.

It can be learned from the foregoing that, in this embodiment of this application, an extra time dimension of three-dimensional convolution relative to two-dimensional convolution is designed.

It should be understood that, in this embodiment of this application, orthogonal transform is performed on the three-dimensional convolution kernel in the time dimension of the three-dimensional convolution kernel of the to-be-compressed three-dimensional convolutional neural network, and the sparse time dimension of the orthogonally transformed three-dimensional convolution kernel is pruned. Compared with the conventional technology, a parameter quantity of the three-dimensional convolutional neural network can be further reduced, and therefore a calculation amount of the three-dimensional convolutional neural network can be effectively reduced.

In step S310, the performing orthogonal transform on a first three-dimensional convolution kernel in a time dimension of the first three-dimensional convolution kernel may be considered as transforming the first three-dimensional convolution kernel onto a target domain by performing orthogonal transform. Correspondingly, in step S320, the pruning the sparse time dimension of the orthogonally transformed first three-dimensional convolution kernel may be considered as pruning the sparse time dimension of the first three-dimensional convolution kernel in the target domain.

In step S310, orthogonal transform may be performed on the first three-dimensional convolution kernel in the time dimension of the first three-dimensional convolution kernel by using an orthogonal matrix.

There may be a plurality of methods for obtaining the orthogonal matrix.

In an optional implementation, the orthogonal matrix is obtained by performing discrete cosine transform (discrete cosine transform, DCT) on a three-dimensional convolution kernel. Specific operations are as follows:

(1) A three-dimensional convolution operation is expanded in the time dimension to obtain the following formula:

$$Y = X^T F = \sum_{i=1}^{d^2 c} x_i^T f_i$$

$X$ represents a matrix corresponding to input data of the to-be-compressed three-dimensional convolutional neural network, $F$ represents a matrix corresponding to the first three-dimensional convolution kernel, $Y$ represents a matrix corresponding to output data of the to-be-compressed three-dimensional convolutional neural network, a size of the first three-dimensional convolution kernel is $d^2 t$, $d$ represents a height and a width of the first three-dimensional convolution kernel, $t$ represents the time dimension of the first three-dimensional convolution kernel, $f_i$ represents a $t$-dimensional vector, and $c$ represents an input channel of the first three-dimensional convolution kernel.

(2) DCT transform is performed on $f_i$, which is as follows:

$$\mathbf{c}_m = \sum_{i=0}^{t-1} \mathbf{f}_i \cos\left[\frac{\pi}{t} m\left(i + \frac{1}{2}\right)\right].$$

$m$ represents a sequence number, $\mathbf{c}_m$ represents an $m^{\text{th}}$ number after DCT transform, and $\mathbf{f}_i$ represents a t-dimensional vector in a matrix corresponding to the three-dimensional convolution kernel.

Equivalently, the DCT transform may also be written as matrix multiplication, which is as follows:

$$C = Sf.$$

$S$ is a DCT transformation matrix of $t \times t$, and $S$ is the orthogonal matrix.

(3) Orthogonal transform is performed on the three-dimensional convolution kernel by using the following formula:

$$Y = \sum_{i=1}^{d^2 c} x_i^T S^T S f_i = X^T \hat{S}^T \hat{S} F$$

$$s.t. \quad \hat{S} = \begin{bmatrix} S & 0 & \cdots & 0 \\ 0 & S & \cdots & 0 \\ \vdots & \vdots & \ddots & \vdots \\ 0 & 0 & \cdots & S \end{bmatrix}$$

According to the invention, the orthogonal matrix is obtained through learning, that is, the orthogonal transform of the three-dimensional convolution kernel in step S310 is learnable. The orthogonal matrix is obtained through learning by using a target optimization function, the target optimization function includes a first item and a second item, the first item makes the orthogonal transform reversible, and the second item makes the orthogonally transformed first three-dimensional convolution kernel sparse in the time dimension.

In an example, the target optimization function used to obtain the orthogonal matrix through learning may be the following target optimization function (1).

The target optimization function (1) is

$$\min_S \left\| Y - X^T F \right\|_F^2 + \lambda \left\| \sum_{i=1}^{d^2 c} S f_i \right\|_{2,1}$$

$$s.t. \quad S^T S = I$$

$X$ represents a matrix corresponding to input data of the to-be-compressed three-dimensional convolutional neural network, $T$ represents a transpose of the matrix, $F$ represents a matrix corresponding to the first three-dimensional convolution kernel, $Y$ represents a matrix corresponding to output data of the to-be-compressed three-dimensional convolutional neural network, a size of the first three-dimensional convolution kernel is $d^2 t$, $d$ represents a height and a width of the first three-dimensional convolution kernel, $t$ represents the time dimension of the first three-dimensional convolution kernel, $f_i$ represents a $t$-dimensional vector, $c$ represents an input channel of the first three-dimensional convolution kernel, $S$ represents the orthogonal matrix, $\lambda$ is a constant, $\left\| \ \right\|_F^2$ represents a square of an F norm $\left\| \ \right\|_F$, $\left\| \ \right\|_{2,1}$ represents an L21 norm, and the L21 norm represents a sum of Euclidean norms of columns in the matrix.

In the target optimization function (1), $\left\| Y - X^T F \right\|_F^2$ is the first item of the target optimization function, and $\lambda \left\| \sum_{i=1}^{d^2 c} S f_i \right\|_{2,1}$ is the second item of the target optimization function. The first item can make the transform reversible. In this way, the convolution operation can be directly performed in the orthogonally transformed target domain, to speed up calculation. The second item can make the orthogonally transformed three-dimensional convolution kernel sparse in the time dimension, which can speed up calculation.

In an embodiment in which the target optimization function used to obtain the orthogonal matrix through learning is the target optimization function (1), step S310 includes: performing orthogonal transform on the first three-dimensional convolution kernel in the time dimension of the first three-dimensional convolution kernel based on a result of solving the target optimization function (1), namely, the orthogonal matrix. Step S320 includes: obtaining the sparsity of the first three-dimensional convolution kernel in the time dimension based on the L21 norm of the orthogonally transformed first three-dimensional convolution kernel, and removing the sparse time dimension, that is, removing a redundant time dimension, to prune the time dimension.

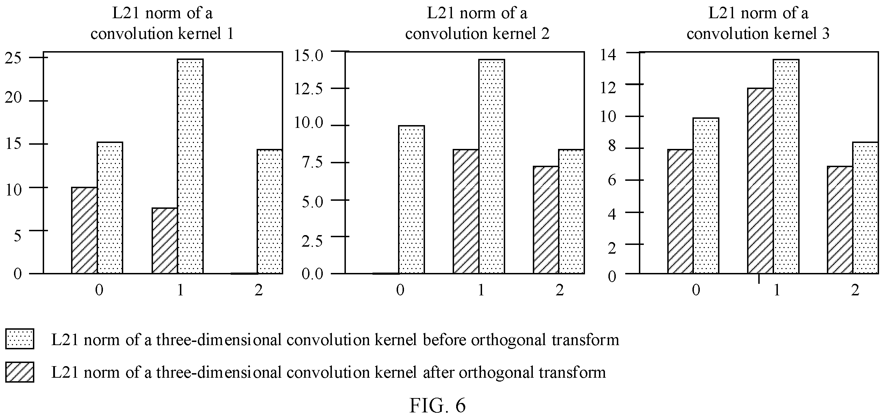

In an example, FIG. 6 is a schematic diagram of L21 norms of the three-dimensional convolution kernel before and after orthogonal transform is performed. In FIG. 6, horizontal coordinates represent channel numbers 0, 1, and 2, and vertical coordinates represent sizes of the L21 norms of the three-dimensional convolution kernel. It can be learned from FIG. 6 that L21 norms of some channels of the orthogonally transformed three-dimensional convolution kernel are very small. For example, in the left figure of FIG. 6, an L21 norm of a channel 2 of the orthogonally transformed three-dimensional convolution kernel is very small; in the middle figure of FIG. 6, an L21 norm of a channel 0 of the orthogonally transformed three-dimensional convolution kernel is very small; and in the right figure of FIG. 6, an L21 norm of a channel 2 of the orthogonally transformed three-dimensional convolution kernel is small. Therefore, corresponding time dimensions may be directly removed.

It should be understood that, in this invention, the learnable orthogonal matrix is used to perform orthogonal transform on the three-dimensional convolution kernel in the time dimension of the three-dimensional convolution kernel. In this way, the orthogonal transform can be more suitable for compressing the time dimension of the three-dimensional convolution kernel. Therefore, calculation can be speeded up with a small precision loss.

In addition to pruning the time dimension of the three-dimensional convolution kernel, compression of the three-dimensional convolutional neural network may further include pruning a channel of the three-dimensional convolution kernel. Refer to FIG. 2, the input channel c and the output channel N of the three-dimensional convolution kernel may be pruned. Usually, an important channel may be selected by minimizing a norm of a function of the channel of the three-dimensional convolution kernel.

In an example, the target optimization function used to prune the channel of the three-dimensional convolution kernel may be the following target optimization function (2).

The target optimization function (2) is

$$\min_{F, \beta} \left\| Y - \sum_{i=1}^{c} \beta_i X_i^T F_i \right\|_F^2 + \gamma \left\| \beta \right\|_1 .$$

$X$ represents a matrix corresponding to input data of the to-be-compressed three-dimensional convolutional neural network, $T$ represents a transpose of the matrix, $F$ represents a matrix corresponding to the first three-dimensional convolution kernel, $Y$ represents a matrix corresponding to output data of the to-be-compressed three-dimensional convolutional neural network, $c$ represents the input channel of the first three-dimensional convolution kernel, $\beta$ represents the function of the channel of the first three-dimensional convolution kernel, $\gamma$ is a constant, $\left\| \ \right\|_F^2$ represents a square of an F norm $\left\| \ \right\|_F$, and $\left\| \ \right\|_1$ represents the norm.

For example, $\beta_i$ represents an indication function of a channel i of the three-dimensional convolution kernel, a value of $\beta_i$ may be 1 or 0, 1 indicates that the channel i is reserved, 0 indicates that the channel i is removed, and $\beta$ is an array including $\beta_i$.

Optionally, in the embodiment shown in FIG. 3, the method further includes: pruning the channel of the first three-dimensional convolution kernel, to obtain the compressed three-dimensional convolutional neural network.

Pruning the channel of the three-dimensional convolution kernel belongs to the conventional technology. Details are not described in this specification.

Optionally, the target optimization function used to obtain the orthogonal matrix through learning may be obtained by combining the target optimization function (1) and the target optimization function (2). In other words, the target optimization function may further include a third item in addition to the second item and the first item, and the third item is the norm of the function of the channel of the first three-dimensional convolution kernel.

In an example, the target optimization function used to obtain the orthogonal matrix through learning may be the following target optimization function (3).

The target optimization function (3) is

$$\min_{S,F,\beta}\left\|Y-\sum_{i=1}^{c}\beta_i X_i^{\ T}F_i\right\|_F^2+\gamma\|\beta\|_1+\lambda\left\|\sum_{j=1}^{d^2c}Sf_j\right\|_{2,1}$$

$$s.t. \quad S^T S = I$$

$X$ represents a matrix corresponding to input data of the to-be-compressed three-dimensional convolutional neural network, $T$ represents a transpose of the matrix, $F$ represents a matrix corresponding to the first three-dimensional convolution kernel, $Y$ represents a matrix corresponding to output data of the to-be-compressed three-dimensional convolutional neural network, a size of the first three-dimensional convolution kernel is $d^2t$, $d$ represents a height and a width of the first three-dimensional convolution kernel, $t$ represents the time dimension of the first three-dimensional convolution kernel, $f_i$ represents a t-dimensional vector, $c$ represents an input channel of the first three-dimensional convolution kernel, $S$ represents the orthogonal matrix, $\beta$ represents the function of the channel of the first three-dimensional convolution kernel, $\gamma$ and $\lambda$ are constants, $\|\ \|_F^2$ represents a square of an F norm $\|\ \|_F$, $\|\ \|_1$ represents the norm, $\|\ \|_{2,1}$ represents an L21 norm, and $\|\ \|_{2,1}$ represents a sum of Euclidean norms of columns in the matrix.

In the target optimization function (3), $\left\|Y-\sum_{i=1}^{c}\beta_i X_i^{\ T}F_i\right\|_F^2$ is the first item of the target optimization function, $\lambda\left\|\sum_{j=1}^{d^2c}Sf_j\right\|_{2,1}$ is the second item of the target optimization function, and $\gamma\|\beta\|_1$ is the third item of the target optimization function. The first item can make the transform reversible. In this way, the convolution operation can be directly performed in the orthogonally transformed target domain, to speed up calculation. The second item can make the orthogonally transformed three-dimensional convolution kernel sparse in the time dimension, which can speed up calculation.

It should be understood that the DCT transform is based on a priori assumption for a plurality of frames of images or video, and the priori assumption is not necessarily suitable for the three-dimensional convolution kernel. In this embodiment, the orthogonal matrix used to perform orthogonal transform on the three-dimensional convolution kernel is obtained through learning by using the target optimization function (for example, the target optimization function (1) or the target optimization function (3) described above). In other words, the learnable orthogonal transform is provided in this embodiment. In this way, orthogonal transform performed on the three-dimensional convolution kernel is more suitable for compressing the time dimension of the three-dimensional convolution kernel. Therefore, the calculation can be speeded up with the small precision loss.

In an embodiment in which the target optimization function used to obtain the orthogonal matrix through learning is the target optimization function (3), step S310 includes: performing orthogonal transform on the first three-dimensional convolution kernel in the time dimension of the first three-dimensional convolution kernel based on a result of solving the target optimization function (3), namely, the orthogonal matrix. Step S320 includes: obtaining the sparsity of the first three-dimensional convolution kernel in the time dimension based on the L21 norm of the orthogonally transformed first three-dimensional convolution kernel, and removing the sparse time dimension, that is, removing a redundant time dimension and a redundant channel, to prune the time dimension and the channel.

FIG. 6 is the schematic diagram of the L21 norms of the three-dimensional convolution kernel before and after orthogonal transform is performed. It can be learned from FIG. 6 that the L21 norms of the some channels of the orthogonally transformed three-dimensional convolution kernel are very small, and may be directly removed.

Based on the foregoing description, in this embodiment of this application, orthogonal transform is performed on the three-dimensional convolution kernel in the time dimension of the three-dimensional convolution kernel of the to-be-compressed three-dimensional convolutional neural network, and the sparse time dimension of the orthogonally transformed three-dimensional convolution kernel is pruned. Compared with the conventional technology, a parameter quantity of the three-dimensional convolutional neural network can be further reduced, and therefore a calculation amount of the three-dimensional convolutional neural network can be effectively reduced.

As described above, this invention is applied to the scenario related to the video processing and the multi-frame image processing. The following describes a solution in which this application is applied to the video processing or the multi-frame image processing.

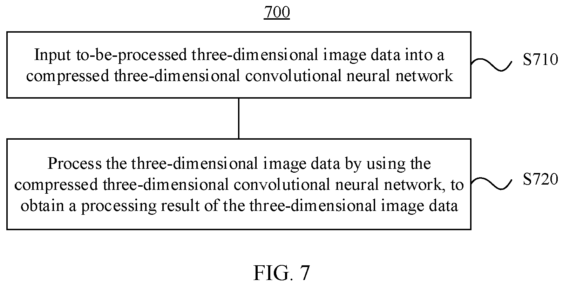

FIG. 7 is a schematic flowchart of a data processing method 700 according to an embodiment of this application. The method 700 may be performed by a data processing apparatus. The apparatus may be a terminal device or a chip. The method 700 includes steps S710 and S720.

S710: Input to-be-processed three-dimensional image data into a compressed three-dimensional convolutional neural network.

S720: Process the three-dimensional image data by using the compressed three-dimensional convolutional neural network, to obtain a processing result of the three-dimensional image data.

The compressed three-dimensional convolutional neural network is obtained by using the method 300 in the foregoing embodiment. Refer to the foregoing step S310 and step S320. Details are not described herein again.

In a process of compressing a to-be-compressed three-dimensional convolutional neural network, input data of the to-be-compressed three-dimensional convolutional neural network is a training sample of the three-dimensional image data. For example, in the foregoing target optimization functions (1), (2), and (3), *X* represents the matrix corresponding to the input data of the to-be-compressed three-dimensional convolutional neural network, and the input data of the to-be-compressed three-dimensional convolutional neural network is the training sample of the three-dimensional image data.

Optionally, the three-dimensional image data is video data, and in step S720, action recognition processing is performed on the video data by using the compressed three-dimensional convolutional neural network, to obtain an action recognition result of the video data.

In a process of compressing a to-be-compressed three-dimensional convolutional neural network, input data of the to-be-compressed three-dimensional convolutional neural network is a training sample of the video data.

The three-dimensional image data is multi-frame image data, and in step S720, target segmentation processing is performed on the multi-frame image data by using the compressed three-dimensional convolutional neural network, to obtain a target segmentation result of the multi-frame image data.

In a process of compressing a to-be-compressed three-dimensional convolutional neural network, input data of the to-be-compressed three-dimensional convolutional neural network is a training sample of the multi-frame image data.

Optionally, in the embodiment shown in FIG. 7, step S710 includes: performing orthogonal transform on the three-dimensional image data by using an orthogonal matrix, to obtain orthogonally transformed three-dimensional image data; and inputting the orthogonally transformed three-dimensional image data into the compressed three-dimensional convolutional neural network.

The orthogonal matrix is consistent with the orthogonal matrix used when orthogonal transform is performed on the first three-dimensional convolution kernel of the to-be-compressed three-dimensional convolutional neural network in step S320 in the foregoing embodiment. In other words, the orthogonal transform operation performed on the three-dimensional image data is consistent with the orthogonal transform operation performed on the first three-dimensional convolution kernel in step S320 in the foregoing embodiment.

For example, in step S310, the first three-dimensional convolution kernel is orthogonally transformed onto the target domain by using the learnable orthogonal matrix; in step S320, the sparse time dimension of the first three-dimensional convolution kernel in the target domain is pruned; in step S710, the to-be-input three-dimensional image data is also transformed onto the target domain by using the orthogonal matrix; and in step S720, a convolution operation is performed on the three-dimensional image data and the compressed three-dimensional convolutional neural network in the target domain.

It should be understood that the convolution operation is directly performed in the orthogonally transformed target domain, so that calculation can be speeded up.

Usually, a three-dimensional convolution operation may be converted into a matrix multiplication operation.

For example, in step S720, the three-dimensional image data is converted into a matrix 1, the three-dimensional convolution kernel of the compressed three-dimensional convolutional neural network is converted into a matrix 2, and the matrix 1 is multiplied by the matrix 2 to obtain a matrix 3, that is, the matrix 3 is a processing result of the three-dimensional image data.

Converting the three-dimensional convolution operation into the matrix multiplication operation belongs to the conventional technology. Details are not described in this specification.

In this embodiment of this application, the convolution operation is performed in the orthogonally transformed target domain, so that the calculation can be speeded up.

This application is tested and implemented on a video action recognition task. Compared with an existing pruning method, a DCT transform method, and the like, the neural network compression method proposed in this application has a smaller error rate gain and higher accuracy when network acceleration is the same. It is shown in Table 1.

**Table 1: Video action recognition error rate gain (%)**

| Model | 2x compression model | 2x compression model |
|---|---|---|
| Existing neural network pruning solution | 0.81 | 3.58 |
| DCT transform solution | 0.42 | 2.96 |
| Method in this application | 0.10 | 2.16 |

It can be learned from Table 1 that in the three-dimensional convolutional neural network compression method provided in this embodiment of this application can be used to improve model running efficiency while maintaining model precision of the three-dimensional convolutional neural network.

Therefore, according to the three-dimensional convolutional neural network compression method provided in this embodiment of this application, compared with the conventional technology, the three-dimensional convolutional neural network can be further compressed, and a small precision loss can be achieved.

It should be understood that applying the three-dimensional convolutional neural network obtained through compression in this application to a three-dimensional image processing scenario can improve image processing efficiency.

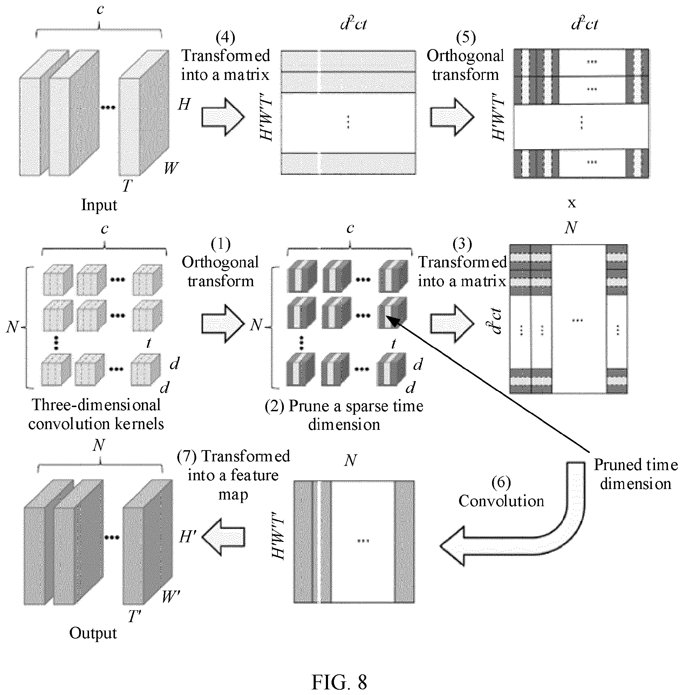

FIG. 8 is a schematic flowchart of a data processing method according to this invention. As shown in FIG. 8, a size of a three-dimensional convolution kernel of a to-be-compressed three-dimensional convolutional neural network is dxdxt, where d represents a width and a height, and t represents a depth (namely, a time dimension). An input channel of the three-dimensional convolution kernel is c, and an output channel of the three-dimensional convolution kernel is N. In FIG. 8, a size of a to-be-processed input feature map is WxHxT, where W represents a width, H represents a height, T represents a depth (namely, a time dimension), and a channel of the input feature map is c (that is, consistent with the input channel c of the three-dimensional convolution kernel).

As shown in FIG. 8, a data processing process may be divided into the following three phases.

An orthogonal transform phase includes step (1).

Step (1): Perform learnable orthogonal transform in the time dimension of the three-dimensional convolution kernel by using a pre-trained three-dimensional convolutional neural network (the three-dimensional convolutional neural network represented by the three-dimensional convolution kernel shown in FIG. 8), to transform the three-dimensional convolution kernel onto a target domain.

For example, step (1) corresponds to step S310 in the foregoing embodiment. For specific description, refer to the foregoing description. Details are not described herein again.

A pruning phase includes step (2).

Step (2): Prune the sparse time dimension of the orthogonally transformed three-dimensional convolution kernel. In other words, the sparse time dimension of the three-dimensional convolution kernel in the target domain is pruned. The pruned time dimension is indicated by an arrow in FIG. 8.

For example, step (2) corresponds to step S320 in the foregoing embodiment. For specific description, refer to the foregoing description. Details are not described herein again.

A convolution calculation phase includes step (6).

Step (6): Perform a convolution operation on the input feature map and the three-dimensional convolution kernel that is pruned in the time dimension, to obtain an output feature map.

The convolution calculation phase may be corresponding to step S710 and step S720 in the foregoing embodiment. For specific description, refer to the foregoing description. Details are not described herein again.

The convolution calculation phase further includes step (5).

Step (5): Perform learnable orthogonal transform on the input feature map in the time dimension, to transform the input feature map onto the target domain.

After step (5), as shown in FIG. 8, the time dimension of the input feature map in the target domain is pruned.

Optionally, in an embodiment including step (5), in step (6), the convolution operation may be performed, in the target domain, on the input feature map and the three-dimensional convolution kernel that is pruned in the time dimension, to obtain the output feature map.

Optionally, in step (6), the three-dimensional convolution operation may be converted into a matrix multiplication operation.

For example, the convolution calculation phase includes step (4), step (3), and step (6).

Step (4): Convert the input feature map into a matrix (denoted as a matrix 1).

Step (3): Convert the pruned three-dimensional convolution kernel into a matrix (denoted as a matrix 2).

Step (6): Multiply the matrix 1 by the matrix 2 (that is, perform the convolution operation on the input feature map and the three-dimensional convolution kernel that is pruned in the time dimension), to obtain a matrix 3. It should be understood that the matrix 3 is a matrix corresponding to the output feature map.

Step (4) and step (5) can be performed in any sequence.

As shown in FIG. 8, step (8) may be further performed in the convolution calculation phase.

Step (8): Transform the matrix 3 into a feature map, namely, the output feature map. As shown in FIG. 8, a size of the output feature map is W'xH'xT', where W' represents a width, H' represents a height, T' represents a depth (namely, a time dimension), and a channel of the output feature map is N (that is, consistent with the output channel N of the three-dimensional convolution kernel).

Based on the foregoing description, in this embodiment of this application, orthogonal transform is performed on the three-dimensional convolution kernel in the time dimension of the three-dimensional convolution kernel of the to-be-compressed three-dimensional convolutional neural network, and the sparse time dimension of the orthogonally transformed three-dimensional convolution kernel is pruned. Compared with the conventional technology, a parameter quantity of the three-dimensional convolutional neural network can be further reduced, and therefore a calculation amount of the three-dimensional convolutional neural network can be effectively reduced.

Embodiments described in this specification may be independent solutions, or may be combined based on internal logic.

The foregoing describes the method embodiments provided in this application, and the following describes apparatus embodiments provided in this application. It should be understood that description of apparatus embodiments corresponds to the description of the method embodiments. Therefore, for content that is not described in detail, refer to the foregoing method embodiments. For brevity, details are not described herein again.

The three-dimensional convolutional neural network compression method provided in embodiments of this application may be applied to a computing node of a related device. For example, running efficiency of a neural network model is improved through software or hardware reconstruction of the computing node.

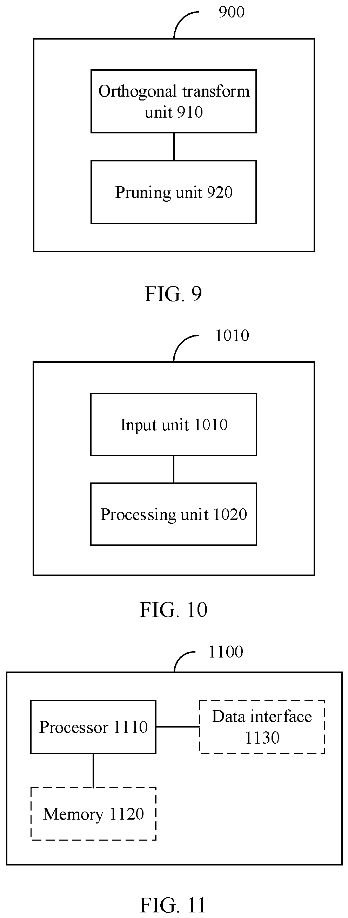

As shown in FIG. 9, an embodiment of this application provides a neural network compression apparatus 900. The apparatus 900 is configured to perform the method 300 in the foregoing embodiment. As shown in FIG. 9, the apparatus 900 includes an orthogonal transform unit 910 and a pruning unit 920.

The orthogonal transform unit 910 is configured to perform orthogonal transform on a first three-dimensional convolution kernel in a time dimension of the first three-dimensional convolution kernel included in a to-be-compressed three-dimensional convolutional neural network.

The pruning unit 920 is configured to prune the time dimension of the first three-dimensional convolution kernel based on sparsity of the orthogonally transformed first three-dimensional convolution kernel in the time dimension, to obtain a compressed three-dimensional convolutional neural network.

For example, the orthogonal transform unit 910 is configured to perform step S310 in the foregoing embodiment. The pruning unit 920 is configured to perform step S320 in the foregoing embodiment. For details, refer to the foregoing description. Details are not described herein again.

The apparatus 900 may be a terminal device or a chip.

The apparatus 900 may be deployed on a computing node of a related device. A running speed of a neural network model can be improved through software or hardware reconstruction. For example, the apparatus 900 may be a compression module of a three-dimensional convolutional neural network on the computing node.

As shown in FIG. 10, an embodiment of this application further provides a data processing apparatus 1000. The apparatus 1000 may be configured to perform the method 700 in the foregoing embodiment. As shown in FIG. 10, the apparatus 1000 includes an input unit 1010 and a processing unit 1020.

The input unit 1010 is configured to input to-be-processed three-dimensional image data into a compressed three-dimensional convolutional neural network.

The processing unit 1020 is configured to process the three-dimensional image data by using the compressed three-dimensional convolutional neural network, to obtain a processing result of the three-dimensional image data.

The compressed three-dimensional convolutional neural network is obtained by performing the following operations: performing orthogonal transform on a first three-dimensional convolution kernel in a time dimension of the first three-dimensional convolution kernel included in a to-be-compressed three-dimensional convolutional neural network; and pruning the time dimension of the first three-dimensional convolution kernel based on sparsity of the orthogonally transformed first three-dimensional convolution kernel in the time dimension.

In a process of compressing the to-be-compressed three-dimensional convolutional neural network, input data of the to-be-compressed three-dimensional convolutional neural network is a training sample of the three-dimensional image data.

For example, the input unit 1010 is configured to perform step S710 in the foregoing embodiment. The processing unit 1020 is configured to perform step S720 in the foregoing embodiment. For details, refer to the foregoing description. Details are not described herein again.

Optionally, the three-dimensional image data is video data, and the processing unit 1020 is configured to perform action recognition processing on the video data by using the compressed three-dimensional convolutional neural network, to obtain an action recognition result of the video data.

The three-dimensional image data is multi-frame image data, and the processing unit 1020 is configured to perform target segmentation processing on the multi-frame image data by using the compressed three-dimensional convolutional neural network, to obtain a target segmentation result of the multi-frame image data.

The input unit 1010 is configured to: perform orthogonal transform on the three-dimensional image data by using an orthogonal matrix, to obtain orthogonally transformed three-dimensional image data; and input the orthogonally transformed three-dimensional image data into the compressed three-dimensional convolutional neural network.

As shown in FIG. 11, an embodiment of this application further provides a data processing apparatus 1100. The apparatus 1100 includes a processor 1110. The processor 1110 is coupled to a memory 1120. The memory 1120 is configured to store a computer program or instructions. The processor 1110 is configured to execute the computer program or instructions stored in the memory 1120, so that the method in the foregoing method embodiment is executed.

Optionally, as shown in FIG. 11, the apparatus 1100 may further include a memory 1120.

Optionally, as shown in FIG. 11, the apparatus 1100 may further include a data interface 1130, and the data interface 1130 is configured to transmit data to the outside.

Optionally, in a solution, the apparatus 1100 is configured to implement the method 300 in the foregoing embodiment. In this case, the apparatus 1100 may be referred to as a neural network compression apparatus.

Optionally, in another solution, the apparatus 1100 is configured to implement the method 700 in the foregoing embodiment.

An embodiment of this application further provides a computer-readable medium, where the computer-readable medium stores program code for execution by a device, and the program code includes program code used to perform the method in the foregoing embodiment.

An embodiment of this application further provides a computer program product including instructions, where when the computer program product run on a computer, the computer is enabled to perform the method in the foregoing embodiment.

An embodiment of this application further provides a chip, where the chip includes a processor and a data interface. The processor reads, through the data interface, instructions stored in a memory, to perform the method in the foregoing embodiment.

Optionally, in an implementation, the chip may further include a memory, and the memory stores instructions; the processor is configured to execute the instructions stored in the memory, and when the instructions are executed, the processor is configured to perform the method in the foregoing embodiment.

An embodiment of this application further provides an electronic device, where the electronic device includes the apparatus 900 and/or the apparatus 1000 in the foregoing embodiments.

Unless otherwise defined, all technical and scientific terms used in this specification have the same meanings as those commonly understood by a person skilled in the technical field of this application. The terms used in the specification of this application are merely for the purpose of describing specific embodiments, and are not intended to limit this application.

A person of ordinary skill in the art may be aware that, in combination with the examples described in embodiments disclosed in this specification, units and algorithm steps may be implemented by electronic hardware or a combination of computer software and electronic hardware. Whether functions are performed by hardware or software depends on particular applications and design constraint conditions of the technical solutions.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed systems, apparatuses, and methods may be implemented in other manners. For example, the described apparatus embodiments are merely examples. For example, division into units is merely logical function division and may be other division in an actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a universal serial bus flash disk (USB flash disk, UFD) (The UFD may also be referred to as a USB flash drive or a flash memory), a removable hard disk, a read-only memory (read-only memory, ROM), a random access memory (random access memory, RAM), a magnetic disk, or a compact disc.

Therefore, the protection scope of this invention shall be subject to the protection scope of the claims.

**Claims**

1. A data processing method, carried out by a data-processing apparatus, the method comprising:

   inputting to-be-processed three-dimensional image data into a compressed three-dimensional convolutional neural network; and
   processing the three-dimensional image data by using the compressed three-dimensional convolutional neural network, to obtain a processing result of the three-dimensional image data, wherein
   the compressed three-dimensional convolutional neural network is obtained by performing the following operations:

   performing (S310) orthogonal transform on a first three-dimensional convolution kernel in a time dimension of the first three-dimensional convolution kernel comprised in a to-be-compressed three-dimensional convolutional neural network; and
   pruning (S320) the time dimension of the first three-dimensional convolution kernel based on sparsity of the orthogonally transformed first three-dimensional convolution kernel in the time dimension;
   wherein the three-dimensional image data is multi-frame image data, and the processing the three-dimensional image data to obtain a processing result of the three-dimensional image data comprises:

   performing target segmentation processing on the multi-frame image data by using the compressed three-dimensional convolutional neural network, to obtain a target segmentation result of the multi-frame image data; and
   wherein the performing orthogonal transform on a first three-dimensional convolution kernel in a time dimension of the first three-dimensional convolution kernel comprised in a to-be-compressed three-dimensional convolutional neural network comprises:
   performing, by using an orthogonal matrix, orthogonal transform on the first three-dimensional convolution kernel in the time dimension of the first three-dimensional convolution kernel, wherein the orthogonal matrix is obtained through learning by using a target optimization function, the target optimization function comprises a first item and a second item, the first item makes the orthogonal transform reversible, and the second item makes the orthogonally transformed first three-dimensional convolution kernel sparse in the time dimension.

2. The method according to claim 1, wherein the three-dimensional image data is video data, and
   the processing the three-dimensional image data by using the compressed three-dimensional convolutional neural network, to obtain a processing result of the three-dimensional image data comprises:
   performing action recognition processing on the video data by using the compressed three-dimensional convolutional neural network, to obtain an action recognition result of the video data.

3. The method according to any one of claims 1 to 2, wherein the pruning the time dimension of the first three-dimensional convolution kernel based on sparsity of the orthogonally transformed first three-dimensional convolution kernel in the time dimension comprises:

   obtaining, based on the L21 norm of the orthogonally transformed first three-dimensional convolution kernel, the sparsity of the orthogonally transformed first three-dimensional convolution kernel in the time dimension; and
   pruning the time dimension of the first three-dimensional convolution kernel based on the sparsity.

4. The method according to claim 1, wherein the inputting to-be-processed three-dimensional image data into a compressed three-dimensional convolutional neural network comprises:

   performing orthogonal transform on the three-dimensional image data by using the orthogonal matrix, to obtain orthogonally transformed three-dimensional image data; and
   inputting the orthogonally transformed three-dimensional image data into the compressed three-dimensional convolutional neural network.

5. A data processing apparatus, comprising:

   a memory, configured to store a program; and
   a processor, configured to execute the program stored in the memory, wherein when the program stored in the memory is executed, the processor is configured to perform the method according to any one of claims 1 to 4.

6. A computer-readable storage medium, wherein the computer-readable medium stores program code for execution by a device; and when the program code is executed, the device performs the method according to any one of claims 1 to 4.

7. A chip, comprising at least one processor and a data interface, wherein
the at least one processor is configured to invoke and run, through the data interface, a computer program stored in a memory, to enable the chip to perform the method according to any one of claims 1 to 4.

**Patentansprüche**

1. Datenverarbeitungsverfahren, das von einer Datenverarbeitungsvorrichtung durchgeführt wird, das Verfahren umfassend:

Eingeben von zu verarbeitenden dreidimensionalen Bilddaten in ein komprimiertes dreidimensionales Convolutional Neural Network; und
Verarbeiten der dreidimensionalen Bilddaten unter Verwendung des komprimierten dreidimensionalen Convolutional Neural Network, um ein Verarbeitungsergebnis der dreidimensionalen Bilddaten zu erlangen, wobei das komprimierte dreidimensionale Convolutional Neural Network mittels Durchführen der folgenden Vorgänge erlangt wird:

Durchführen (S310) einer orthogonalen Transformation an einem ersten dreidimensionalen Faltungskern in einer Zeitdimension des ersten dreidimensionalen Faltungskerns, der in einem zu komprimierenden dreidimensionalen Convolutional Neuronal Network enthalten ist; und
Beschneiden (S320) der Zeitdimension des ersten dreidimensionalen Faltungskerns basierend auf der Dünnbesetztheit des orthogonal transformierten ersten dreidimensionalen Faltungskerns in der Zeitdimension;
wobei die dreidimensionalen Bilddaten Multiframe-Bilddaten sind und die Verarbeitung der dreidimensionalen Bilddaten zum Erlangen eines Verarbeitungsergebnisses der dreidimensionalen Bilddaten umfasst:

Durchführen einer Zielsegmentierungsverarbeitung an den Multiframe-Bilddaten unter Verwendung des komprimierten dreidimensionalen Convolutional Neural Network, um ein Zielsegmentierungsergebnis der Multiframe-Bilddaten zu erlangen; und
wobei das Durchführen einer orthogonalen Transformation an einem ersten dreidimensionalen Faltungskern in einer Zeitdimension des ersten dreidimensionalen Faltungskerns, der in einem zu komprimierenden dreidimensionalen Convolutional Neuronal Network enthalten ist, umfasst:
Durchführen einer orthogonalen Transformation an dem ersten dreidimensionalen Faltungskern in der Zeitdimension des ersten dreidimensionalen Faltungskerns unter Verwendung einer orthogonalen Matrix, wobei die orthogonale Matrix durch Lernen unter Verwendung einer Zieloptimierungsfunktion erlangt wird, die Zieloptimierungsfunktion ein erstes und ein zweites Element umfasst, das erste Element die orthogonale Transformation umkehrbar macht und das zweite Element den orthogonal transformierten ersten dreidimensionalen Faltungskern in der Zeitdimension dünnbesetzt macht.

2. Verfahren nach Anspruch 1, wobei die dreidimensionalen Bilddaten Videodaten sind, und
das Verarbeiten der dreidimensionalen Bilddaten unter Verwendung des komprimierten dreidimensionalen Convolutional Neural Network, um ein Verarbeitungsergebnis der dreidimensionalen Bilddaten zu erlangen, umfasst:
Durchführen einer Aktionserkennungsverarbeitung an den Videodaten unter Verwendung des komprimierten dreidimensionalen Convolutional Neuronal Network, um ein Aktionserkennungsergebnis der Videodaten zu erlangen.

3. Verfahren nach einem der Ansprüche 1 bis 2, wobei das Beschneiden der Zeitdimension des ersten dreidimensionalen Faltungskerns basierend auf der Dünnbesetztheit des orthogonal transformierten ersten dreidimensionalen Faltungskerns in der Zeitdimension umfasst:

Erlangen der Dünnbesetztheit des orthogonal transmormierten ersten dreidimensionalen Faltungskerns in der Zeitdimension basierend auf der Norm L21 des orthogonal transformierten ersten dreidimensionalen Faltungskerns; und

Beschneiden der Zeitdimension des ersten dreidimensionalen Faltungskerns basierend auf der Dünnbesetztheit.

**4.** Verfahren nach Anspruch 1, wobei das Eingeben der zu verarbeitenden dreidimensionalen Bilddaten in ein komprimiertes dreidimensionales Convolutional Neural Network umfasst:

Durchführen einer orthogonalen Transformation an den dreidimensionalen Bilddaten unter Verwendungen der orthogonalen Matrix, um orthogonal transformierte dreidimensionale Bilddaten zu erlangen; und
Eingeben der orthogonal transformierten dreidimensionalen Bilddaten in das komprimierte dreidimensionale Convolutional Neural Network.

**5.** Datenverarbeitungsvorrichtung, umfassend:

einen Speicher, der konfiguriert ist, um ein Programm zu speichern; und
einen Prozessor, der konfiguriert ist, um das Programm, das in dem Speicher gespeichert ist, auszuführen, wobei, wenn das Programm, das in dem Speicher gespeichert ist, ausgeführt wird, der Prozessor konfiguriert ist, um das Verfahren nach einem der Ansprüche 1 bis 4 durchzuführen.

**6.** Computerlesbares Speichermedium, wobei das computerlesbare Medium Programmcode zur Ausführung Ausführen durch eine Vorrichtung speichert; und wobei, wenn der Programmcode ausgeführt wird, die Vorrichtung das Verfahren nach einem der Ansprüche 1 bis 4 durchführt.

**7.** Chip, umfassend mindestens einen Prozessor und eine Datenschnittstelle, wobei
der mindestens eine Prozessor konfiguriert ist, um über die Datenschnittstelle ein in einem Speicher gespeichertes Computerprogramm aufzurufen und auszuführen, um dem Chip die Durchführung des Verfahrens nach einem der Ansprüche 1 bis 4 zu ermöglichen.

**Revendications**

**1.** Procédé de traitement de données, mis en œuvre par un appareil de traitement de données, le procédé comprenant :

la saisie de données d'image tridimensionnelles à traiter dans un réseau neuronal convolutif tridimensionnel compressé ; et
le traitement des données d'image tridimensionnelles à l'aide du réseau neuronal convolutif tridimensionnel compressé, pour obtenir un résultat de traitement des données d'image tridimensionnelles, dans lequel
le réseau neuronal convolutif tridimensionnel compressé est obtenu en réalisant les opérations suivantes :

la réalisation (S310) d'une transformation orthogonale sur un premier noyau de convolution tridimensionnel dans une dimension temporelle du premier noyau de convolution tridimensionnel compris dans un réseau neuronal convolutif tridimensionnel à compresser ; et
l'élagage (S320) de la dimension temporelle du premier noyau de convolution tridimensionnel sur la base de la parcimonie du premier noyau de convolution tridimensionnel transformé orthogonalement dans la dimension temporelle ;
dans lequel les données d'image tridimensionnelles sont des données d'image mutli-trames, et le traitement des données d'image tridimensionnelles pour obtenir un résultat de traitement des données d'image tridimensionnelles comprend :

la réalisation d'un traitement de segmentation cible sur les données d'image mutli-trames à l'aide du réseau neuronal convolutif tridimensionnel compressé, pour obtenir un résultat de segmentation cible des données d'image mutli-trames ; et
dans lequel la réalisation d'une transformation orthogonale sur un premier noyau de convolution tridimensionnel dans une dimension temporelle du premier noyau de convolution tridimensionnel compris dans un réseau neuronal convolutif tridimensionnel à compresser comprend :
la réalisation, à l'aide d'une matrice orthogonale, d'une transformation orthogonale sur le premier noyau de convolution tridimensionnel dans la dimension temporelle du premier noyau de convolution tridimensionnel, dans lequel la matrice orthogonale est obtenue par apprentissage à l'aide d'une fonction d'optimisation cible, la fonction d'optimisation cible comprend un premier élément et un second élément, le premier élément rend la transformation orthogonale réversible et le second élément rend le premier noyau de convolution tridimensionnel transformé orthogonalement parcimonieux dans la dimension temporelle.

2. Procédé selon la revendication 1, dans lequel les données d'image tridimensionnelles sont des données vidéo, et le traitement des données d'image tridimensionnelles à l'aide du réseau neuronal convolutif tridimensionnel compressé, pour obtenir un résultat de traitement des données d'image tridimensionnelles comprend :
la réalisation d'un traitement de reconnaissance d'action sur les données vidéo à l'aide du réseau neuronal convolutif tridimensionnel compressé, pour obtenir un résultat de reconnaissance d'action des données vidéo.

3. Procédé selon l'une quelconque des revendications 1 et 2, dans lequel l'élagage de la dimension temporelle du premier noyau de convolution tridimensionnel, sur la base de la parcimonie du premier noyau de convolution tridimensionnel transformé orthogonalement dans la dimension temporelle, comprend :

l'obtention, sur la base de la norme L21 du premier noyau de convolution tridimensionnel transformé orthogonalement, de la parcimonie du premier noyau de convolution tridimensionnel transformé orthogonalement dans la dimension temporelle ; et
l'élagage de la dimension temporelle du premier noyau de convolution tridimensionnel sur la base de la parcimonie.

4. Procédé selon la revendication 1, dans lequel la saisie de données d'image tridimensionnelles à traiter dans un réseau neuronal convolutif tridimensionnel compressé comprend :

la réalisation d'une transformation orthogonale sur les données d'image tridimensionnelles à l'aide de la matrice orthogonale, pour obtenir des données d'image tridimensionnelles transformées orthogonalement ; et
la saisie des données d'image tridimensionnelles transformées orthogonalement dans le réseau neuronal convolutif tridimensionnel compressé.

5. Appareil de traitement de données, comprenant :

une mémoire, configurée pour stocker un programme ; et
un processeur, configuré pour exécuter le programme stocké dans la mémoire, dans lequel lorsque le programme stocké dans la mémoire est exécuté, le processeur est configuré pour réaliser le procédé selon l'une quelconque des revendications 1 à 4.

6. Support de stockage lisible par ordinateur, dans lequel le support lisible par ordinateur stocke un code de programme destiné à être exécuté par un dispositif ; et lorsque le code de programme est exécuté, le dispositif réalise le procédé selon l'une quelconque des revendications 1 à 4.

7. Puce, comprenant au moins un processeur et une interface de données, dans laquelle
l'au moins un processeur est configuré pour invoquer et exécuter, via l'interface de données, un programme informatique stocké dans une mémoire, pour permettre à la puce de réaliser le procédé selon l'une quelconque des revendications 1 à 4.

FIG. 1

Input feature map $\quad\quad$ Three-dimensional convolution kernel $\quad\quad$ Output feature map

FIG. 2

300

| Perform orthogonal transform on a first three-dimensional convolution kernel in a time dimension of the first three-dimensional convolution kernel of a to-be-compressed three-dimensional convolutional neural network | S310 |

| Prune the time dimension of the first three-dimensional convolution kernel based on sparsity of the orthogonally transformed first three-dimensional convolution kernel in the time dimension, to obtain a compressed three-dimensional convolutional neural network | S320 |

FIG. 3

Original three-dimensional
convolution kernels

Orthogonally transformed three-dimensional
convolution kernels

FIG. 4

Orthogonal
transform

Pruned time dimensions

FIG. 5

FIG. 6

700

| Input to-be-processed three-dimensional image data into a compressed three-dimensional convolutional neural network | S710 |

| Process the three-dimensional image data by using the compressed three-dimensional convolutional neural network, to obtain a processing result of the three-dimensional image data | S720 |

FIG. 7

FIG. 8

900

Orthogonal transform
unit 910

Pruning unit 920

FIG. 9

1010

Input unit 1010

Processing unit 1020

FIG. 10

1100

Processor 1110

Data interface
1130

Memory 1120

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Pruning 3D Filters For Accelerating 3D ConvNets. **WANG ZHENZHEN et al.** IEEE Transactions On Multimedia. IEEE, 30 October 2019, vol. 22, 2126-2137